# EUROPEAN PATENT APPLICATION

(11) **EP 1 128 611 A2**
(43) Date of publication of application: **29.08.2001**
(21) Application number: 01104356.9
(22) Date of filing: 23.02.2001
(51) Int. Cl.: H04L 12/56

(54) **Method for table lookup**

(30) Priority: 23.02.2000 JP 2000045298
(71) Applicant: NEC CORPORATION, Tokyo (JP)
(72) Inventor: Harasawa, Akio, NEC Corporation, Tokyo (JP); Kanoh, Toshiyuki, NEC Corporation, Tokyo (JP)
(74) Representative: Betten & Resch

(57) **Abstract**

An entry storing packet information to be retrieved at a high speed is hit by retrieval with a high-speed retrieval mechanism. Packet information to be retrieved at a medium speed is not cataloged in the high-speed retrieval mechanism and is miss-hit by retrieval with the high-speed retrieval mechanism, but is hit by retrieval with a medium-speed retrieval mechanism. The other packet information is cataloged in only a low-speed retrieval mechanism, which is realized by software or the like, and is hit by retrieval with the low-speed retrieval mechanism. This construction can realize a table-type data retrieval mechanism which can realize required retrieval performance at low cost and can dynamically cope with a variation in packet arrival frequency to reduce unnecessary cost.

## Description

### FIELD OF THE INVENTION

The invention relates to a table-type data retrieval mechanism, a packet processing system using the same, and a table-type data retrieval method for the packet processing system, and more particularly to a method for retrieving a table using, as a retrieval key, information contained in a packet, to be processed, in its header, for example, in a packet processing system.

### BACKGROUND OF THE INVENTION

In a conventional table-type data retrieval mechanism, particularly in a packet processing system, such as an IP (internet protocol) router, a table is retrieved using, as a retrieval key, information contained in a packet, to be processed, in its header (for example, a combination of a destination address with other necessary information field within the header) to resolve how to handle the packet (for example, a decision on a transport destination port or a decision on a service class).

A software processing system is generally responsible for the table-type data retrieval function. An increase in speed and an increase in capacity of communication devices in recent years, however, had lead to a demand for the realization of this function by a hardware retrieval engine.

A conventional method for meeting this demand is general to package a function, equivalent to a retrieval algorithm executed in the software, as a specialty hardware circuit, or alternatively is such that all table data as the retrieval object are disposed in a hardware retrieval engine using a special memory device for high-speed retrieval purposes, such as CAM (contents addressable memory), to execute retrieval at a high speed.

For example, as described in Japanese Patent Laid-Open No. 261078/1994, among entries in a routing table, an entry, which has been hit once, is cataloged in a cache to which CAM has been applied.

More specifically, as shown in Fig. 9, a table retrieval router described in this publication has a network interface 7 which is divided into a filtering control unit 7a and a routing control unit 7b.

The filtering control unit 7a comprises: a network send/receive circuit 72 which sends a packet to LAN (local area network) and receives a packet from LAN; and a filtering control circuit 73 for retrieving a filtering table 71 to judge whether the packet should be transferred to a receive buffer 86 in the routing control unit 7b or should be discarded.

The routing control unit 7b comprises: a routing control circuit 88 which retrieves a routing table 84 through CAM 82 and a corresponding table 83 to judge whether necessary information should be added to the packet scored in the receive buffer 86 to send the packet to a circuit 89 for send/receive between interfaces for transfer to other network interface, or should be discarded; and a send buffer 87 for sending a packet to LAN through the network send/receive circuit 72. These circuits are controlled by a processor 90 according to a program within a memory 91.

Fig. 10 is a flow chart showing processing executed until the retrieval of the routing table 81 is completed in the routing control unit 7b, Fig. 11 a flow chart showing cataloging of CAM B2 and the corresponding table 83 in the routing control unit 76, and Figs. 12 and 13 flow charts showing other processing in the routing control unit 7b. In these drawings. DN designates a destination network address, H( ) a hash function, HN a destination network address after hashing, and RP a pointer which points to the routing table 84.

Fig. 14 shows an example of the construction of CAM 82, the corresponding table 83 and the routing table 84. In Fig. 14A, the routing table 84 comprises a destination network address, a mask, TOS (type of service), a destination within an extraction network, and a send interface.

In Fig. 14B, CAM 82 comprises a destination network address + TOS, and the corresponding table 83 comprises a destination network address, TOS, and a pointer which points to a corresponding entry.

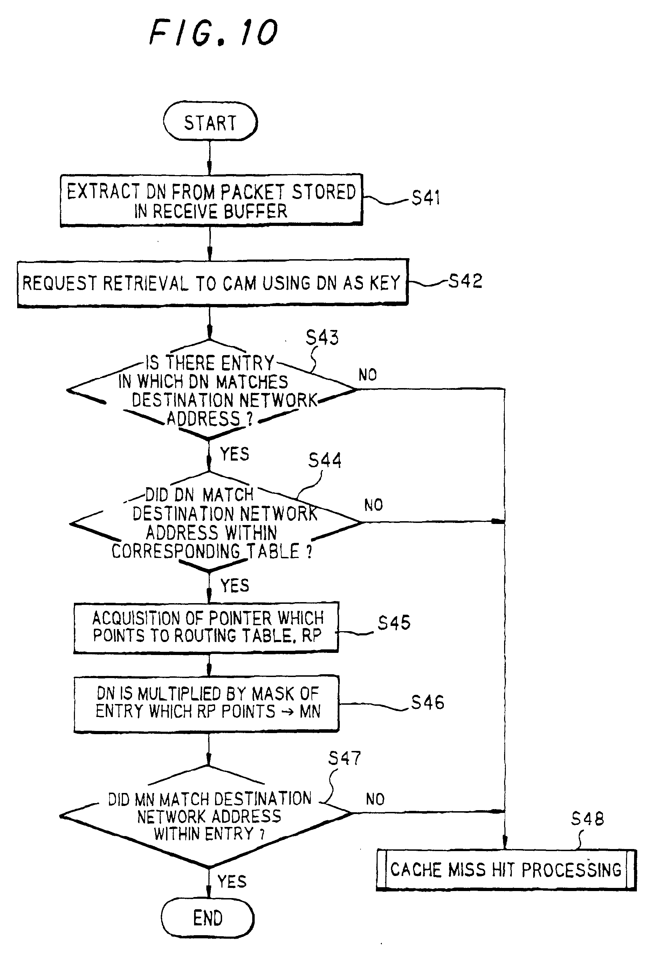

The operation of the routing control unit 7b will be explained. The routing control unit 7b extracts a destination network address DN from the packet stored in the receive buffer 86 (step S41 in Fig. 10), and sends, using DN as a key, a request, for retrieval, to CAM 82 through a hardware (step S42 in Fig. 10). When there is an entry in which DN matches the destination network address (step S43 in Fig. 10), whether or not the destination network address cataloged in the corresponding table 83 matches DN is examined (step S44 in Fig 10). when the destination network address cataloged in the corresponding table 83 matches DN. a pointer which points to the routing table 84, RP, is acquired (step S45 in Fig. 10).

Next, DN is multiplied by a mask of the entry of the routing table 84, to which the RP points, to determine an MN value (step S46 in Fig. 10). Since MN matches the destination network address within the entry (step S47 in Fig. 10), this entry is used as the result of retrieval in routing processing.

In step S43, when there is no entry in which DN matches the destination network address, or, in step S44, when the destination network address cataloged in the corresponding table 83 does not match DN, or, in step S47, when MN does not match the destination network address within the entry, this results in cache miss hitting. In this case, direct retrieval of the routing table 84 using DN as a key is carried out (step S48 in Fig. 10).

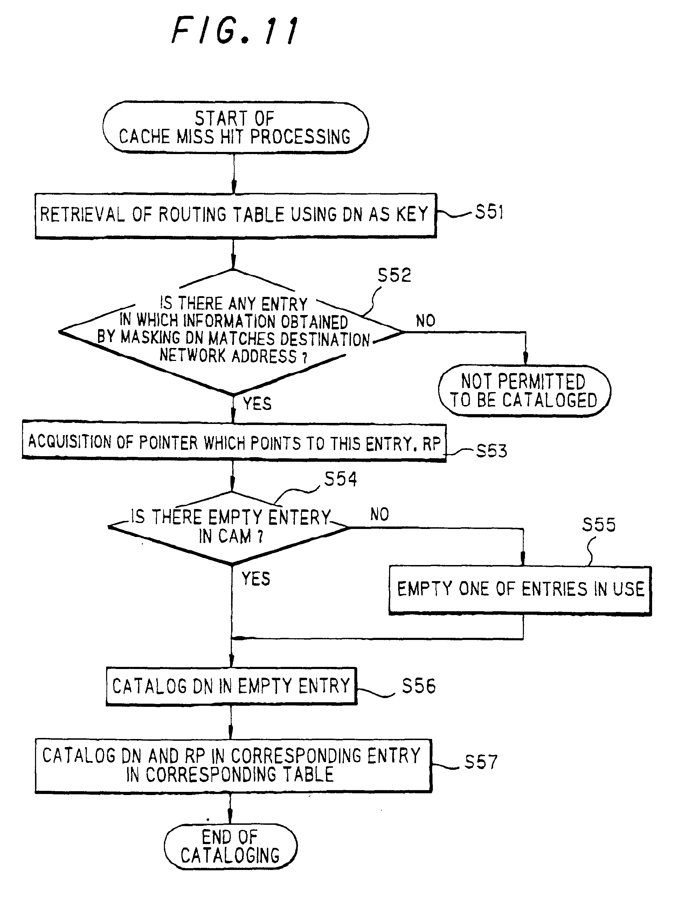

The routing control unit 7b retrieves the routing table 84, using as a key the destination network address DN extracted from the packet stored in the receive buffer 86 (step S51 in Fig. 11), reads the entry contents one entry by one entry, and continues the retrieval until an entry is found in which information obtained by masking DN matches the destination network address.

As a result, when there is a matched entry (step S52 in Fig. 11), a pointer RP, which points to this entry, is acquired (step S53 in Fig. 11). Whether or not there is an empty entry in CAM 82 is then examined, when there is an empty entry (step S54 in Fig. 11), DN is cataloged in this empty entry (step S56 in Fig. 11). DN and RP are cataloged in the corresponding table in its entry corresponding to this entry (step S57 in Fig. 11).

On the other hand, in step S52, when no matched entry is found, DN is judged to be one which should not be cataloged. In step S54, when there is no empty entry in CAM 82, one of entries currently in use is emptied through a proper algorithm (step S55 in Fig. 11) and DN is then cataloged in the emptied entry (step S56 in Fig. 11).

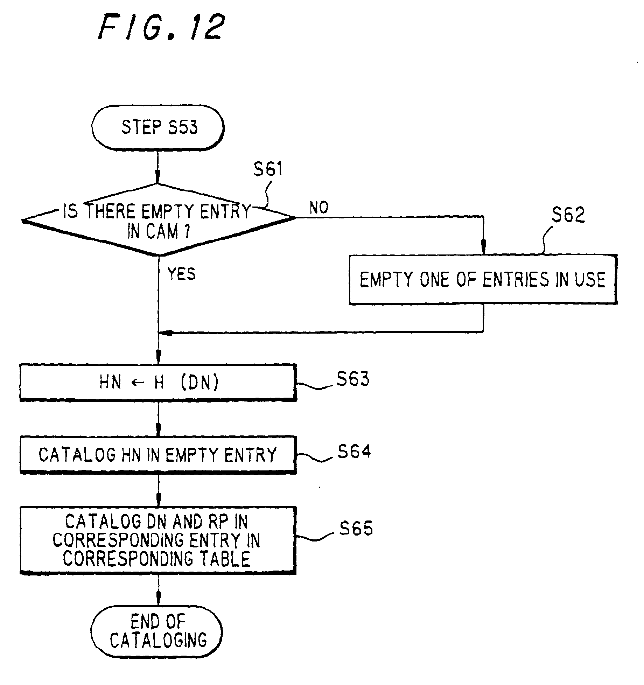

When an empty entry has been found in CAM 82 (step S61 in Fig. 12), the routing control unit 7b converts, through a hash function H for converting the destination network address DN to the entry size of CAM 82, DN to a destination network address HN after hashing (step S63 in Fig. 12), catalogs this HN in the empty entry in CAM 82 (step S64 in Fig. 12), and catalogs DN and the pointer RP, which points to the routing table 84, in the corresponding entry in the corresponding table 83 (step S65 in Fig. 12).

On the other hand. in step S61, when no empty entry has been found in CAM 82, one of entries currently in use is emptied through a proper algorithm (step S62 in Fig. 12) and HN is cataloged in this emptied entry (step S63, S64 in Fig. 12).

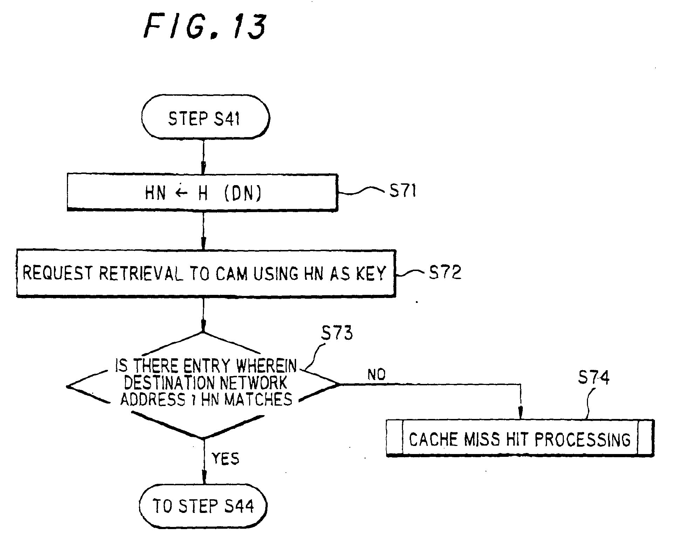

The routing control unit 7b converts, through a hash function, the destination network address DN extracted from the packet to HN (step S71 in Fig. 13), gives a request for retrieval through a hardware to CAM 82 using this HN as a key (step S72 in Fig. 13). Based on this request, whether or not there is an entry in which HN matches the destination network address is examined (step S73 in Fig. 13). When there was a matched entry, the processings of step S44 and later steps shown in Fig. 10 are carried out, while, when there was no matched entry, cache miss hit processing is carried out (step S74 in Fig. 13).

The conventional table retrieval method, for example, the method described in the above publication, does not have a construction such that retrieval mechanisms having a plurality of performance grades based on a policy specified for each entry are provided, and are properly used according to respective suitable situations.

For this reason, in a system wherein traffics different from each other in required processing performance or cost are present together, all the packets occupy data entries cataloged on a high-cost hardware processing engine. As a result, as the whole system, disadvantageously, there are some portions, which incur unnecessarily high cost, in order to provide unnecessarily high performance.

Further, in the method described in the above publication, when the cache method is not used, packets corresponding to entries not cataloged in the hardware retrieval engine cannot be resolved- Further, data entries, which have been once cataloged in the high-speed/high-cost retrieval mechanism, are not deleted even when the arrival frequency of packets corresponding to them is low.

This makes it necessary to hold large-scale information, including packets with low arrival frequency and entries for resolving packets for which high-performance resolution is not required, on the data table in an expensive hardware retrieval engine. Here again, this indicates that, disadvantageously, there are portions which incur unnecessary cost.

### SUMMARY OF THE INVENTION

Accordingly, it is an object of the invention to solve the above problems of the prior art and to provide a table-type data retrieval mechanism, which can realize required retrieval performance at low cost and can dynamically cope with a variation in packet arrival frequency to reduce unnecessary cost, a packet processing system using the same, and a table-type data retrieval method for the packet processing system.

According to the first feature of the invention, a table-type data retrieval mechanism, for retrieving a table using, as a retrieval key, information contained in a packet header of a packet to be processed in a packet processing system, thereby resolving how to handle the packet, comprises: a first retrieval mechanism for performing the retrieval of the table at a high speed; and a second retrieval mechanism for performing the retrieval of the table at a lower speed than the first retrieval mechanism, said retrieval being performed using one retrieval mechanism selected from the first retrieval mechanism and the second retrieval mechanism according to required retrieval performance and cost which are different from entry to entry to be cataloged in the cable.

According to the second feature of the invention, a table-type data retrieval mechanism, for retrieving a table using, as a retrieval key, information contained in a packet header of a packet to be processed in a packet processing system, thereby resolving how to handle the packet, comprises: a first retrieval mechanism for performing the retrieval of the table at a high speed; a second retrieval mechanism for performing the retrieval of the table at a lower speed than the first retrieval mechanism: and a third retrieval mechanism for performing the retrieval of the table at a lower speed than the second retrieval mechanism, said retrieval being performed using one retrieval mechanism selected from the first retrieval mechanism, the second retrieval mechanism, and the third retrieval mechanism according to required retrieval performance and cost which are different from entry to entry to be cataloged in the table.

According to the third feature of the invention, a packet processing system comprises: the table-type data retrieval mechanism according to the first feature of the invention; and a switch fabric for outputting and sending the result of switching on the result of retrieval performed by the table-type data retrieval mechanism to an output port.

According to the fourth feature of the invention, a packet processing system comprises: the table-type data retrieval mechanism according to the second feature of the invention; and a switch fabric for outputting and sending the result of switching on the result of retrieval performed by the table-type data retrieval mechanism to an output port.

According to the fifth feature of the invention, a table-type data retrieval method, for retrieving a table using, as a retrieval key, information contained in a packet header of a packet to be processed in a packet processing system, thereby resolving how to handle the packet, comprises: a first retrieval step for performing the retrieval of the table at a high speed; and a second retrieval step for performing the retrieval of the table at a lower speed than the first retrieval step, said retrieval being performed by operating one retrieval step selected from the first retrieval step and the second retrieval step according to required retrieval performance and cost which are different from entry to entry to be cataloged in the table.

According to the sixth feature of the invention, a table-type data retrieval method, for retrieving a table using, as a retrieval key, information contained in a packet header of a packet to be processed in a packet processing system, thereby resolving how to handle the packet, comprises: a first retrieval step for performing the retrieval of the table at a high speed;
a second retrieval step for performing the retrieval of the table at a lower speed than the first retrieval step when the resolution could not have been obtained in the first retrieval step; and a third retrieval step for performing the retrieval of the table at a lower speed than the second retrieval step when the resolution could not have been obtained in the second retrieval step.

Specifically, according to the table-type data retrieval mechanism of the invention, a plurality of mechanisms, for holding and retrieving table-type data, which are different from each other or one another in necessary retrieval time and packaging cost per unit entry, are disposed in a packet processing system, such as an IP router, in its table-type data retricval mechanism portion, and a decision is made, on the retrieval mechanism in which the entry is cataloged, based on a demand, for example, for retrieval performance and cost (thereinafter referred to as "policy"), which is different from table entry to table entry to be cataloged, whereby retrieval performance and cost according to the policy for each entry are provided.

More specifically, according to the table-type data retrieval mechanism of the invention, three types (high-speed, medium-speed, and low-speed) retrieval mechanism, which are different from one another in necessary retrieval time and cost, are provided in a construction such that a necessary portion is extracted from a received packet in its header information and is used as a retrieval keyword to find out from a data table a data entry which matches this portion, and, based on information obtained from this entry, a new packet header is rewritten, or otherwise output port information is imparted to said packet.

This table-type data retrieval mechanism is operated in such a manner that an entry storing packet information to be retrieved at a high speed is hit by retrieval with the high-speed retrieval mechanism, packet information to be retrieved at a medium speed is not cataloged in the high-speed retrieval mechanism and thus is miss-hit by retrieval with the high-speed retrieval mechanism and is hit by retrieval with the medium-speed retrieval mechanism, while the other packet information is cataloged in only the low-speed retrieval mechanism, which is realized, for example, by software, and is hit by retrieval with the low-speed retrieval mechanism.

In this case, use is made of a characteristic such that, in general, a mechanism having high-speed retrieval performance is high in cost per unit entry, while a mechanism having low retrieval performance is low in cost per unit entry. That is, the high-cost retrieval mechanism is used in only packets with high arrival frequency or packets of users who bear reasonable charges for high performance, and a medium-cost retrieval mechanism is used in packets with medium arrival frequency or packets of users who bear reasonable charges for medium quality, while the low-cost retrieval mechanism is used in the other cases. By virtue of this, as a whole, the cost can be kept low while meeting the demand for performance.

### BRIEF DESCRIPTION OF THE DRAWINGS

The invention will be explained in more detail in conjunction with the appended drawings, wherein:

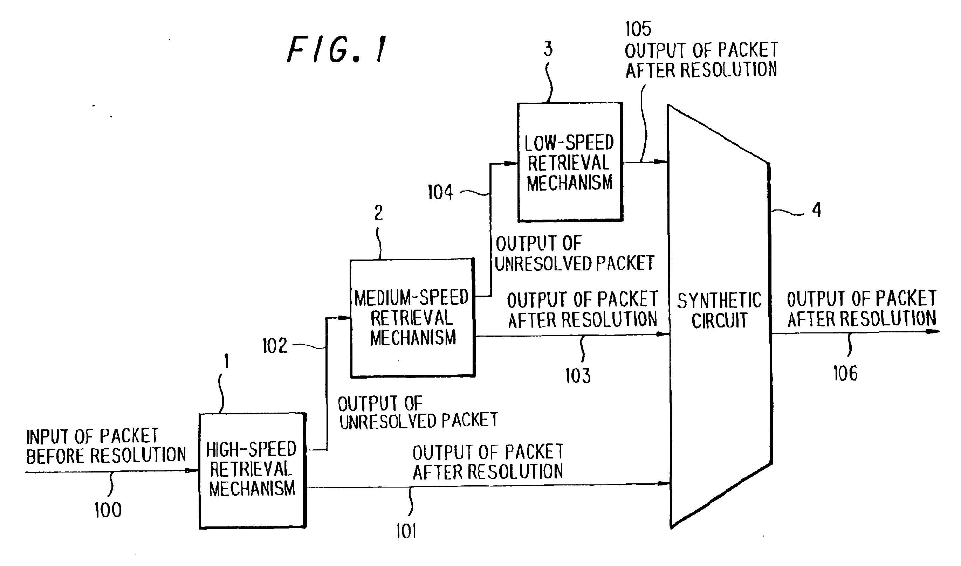

Fig. 1 is a block diagram showing the construction of a table-type data retrieval mechanism according to one preferred embodiment of the invention;

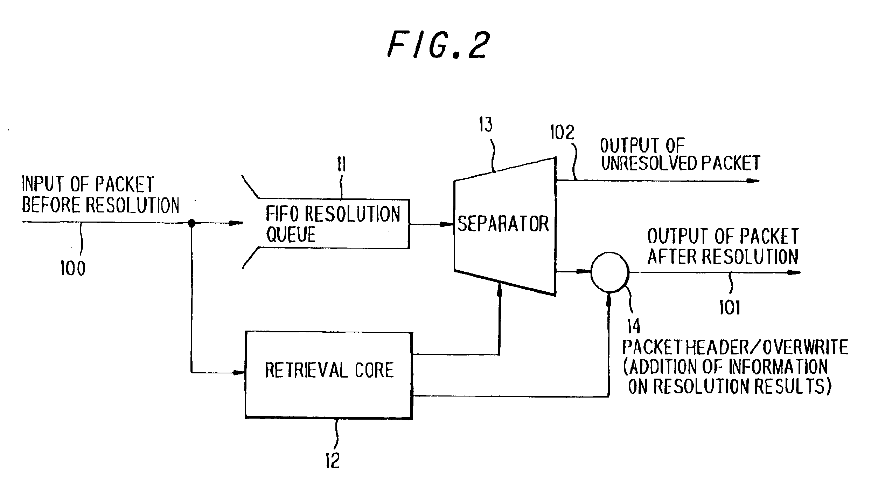

Fig. 2 is a block diagram showing the construction of a high-speed retrieval mechanism shown in Fig. 1;

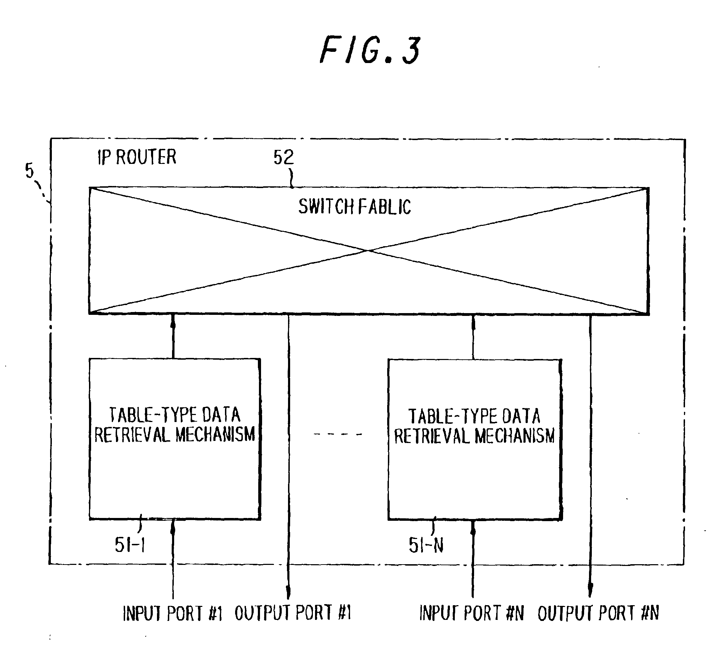

Fig. 3 is a block diagram showing the construction of an IP router using the table-type data retrieval mechanism according to one preferred embodiment of the invention:

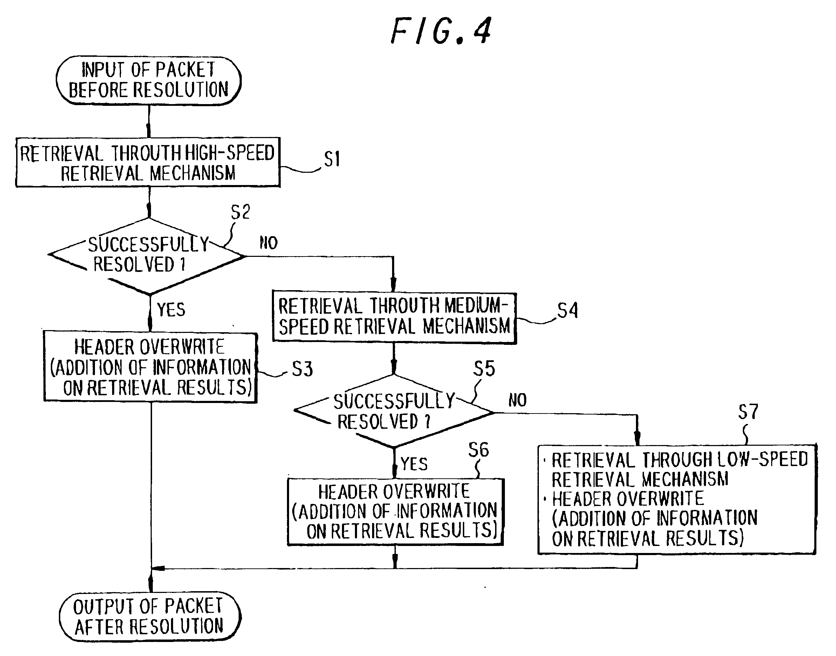

Fig. 4 is a flow chart showing the operation of the table-type data retrieval mechanism according to one preferred embodiment of the invention;

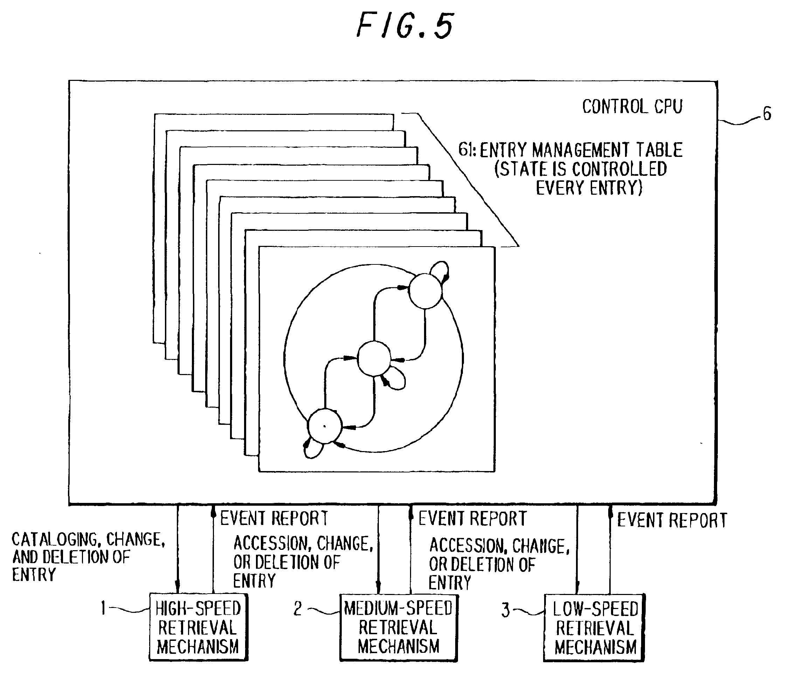

Fig. 5 is a block diagram showing the construction of a table-type data retrieval mechanism according to another preferred embodiment of the invention;

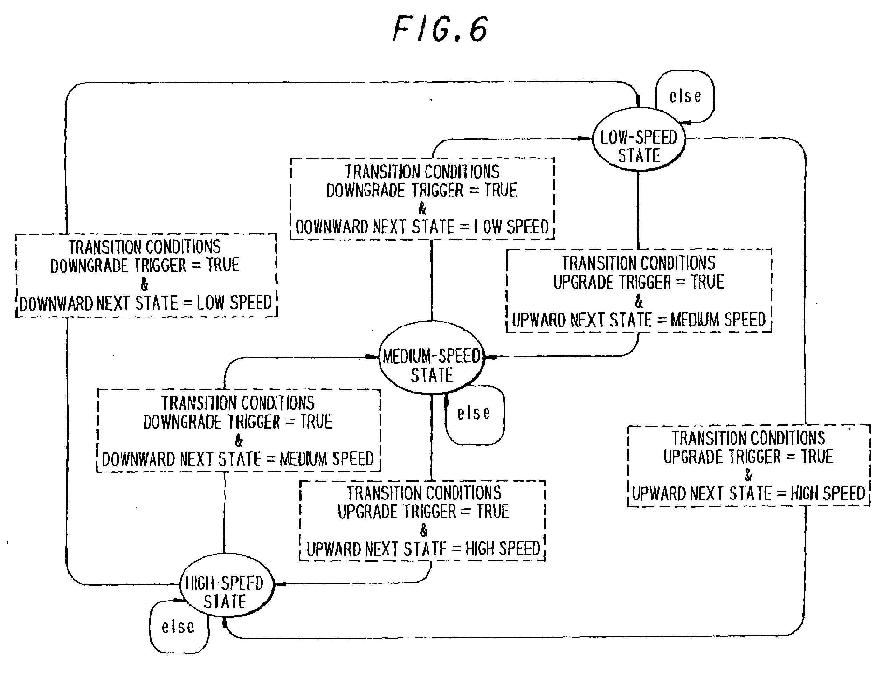

Fig. 6 is a diagram showing the detailed operation of state management for deciding a position where an entry is to be disposed, using an event report by control CPU shown in Fig. 5;

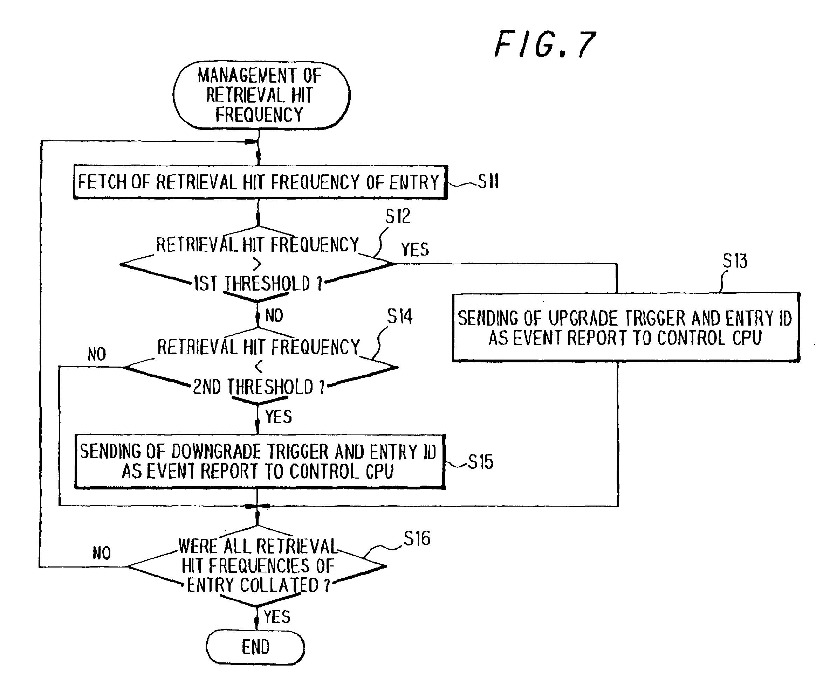

Fig. 7 is a flow chart showing the management of retrieval hit frequency of entry for each of high-speed, medium-speed, and low-speed retrieval mechanisms shown in Fig. 5;

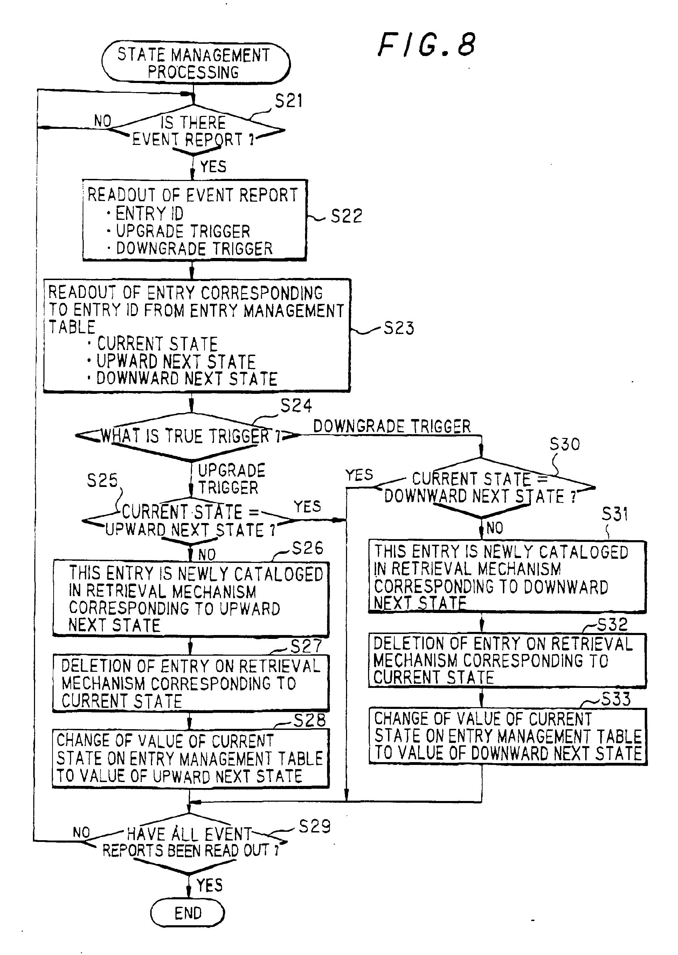

Fig. 8 is a flow chart showing state management of control CPU shown in Fig. 5;

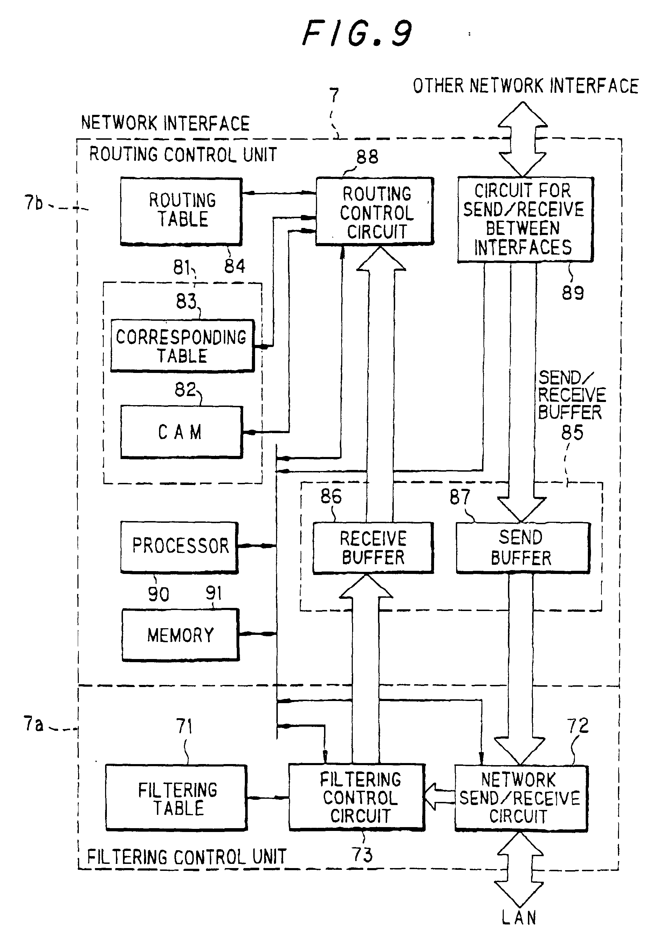

Fig. 9 is a block diagram showing the construction of a conventional network interface;
Fig. 10 is a flow chart showing processing executed until the retrieval of a routing table is completed in the routing control unit shown in Fig. 9;
Fig. 11 is a flow chart showing cataloging of CAM and a corresponding table in a routing control unit shown in Fig. 9;
Fig. 12 is a flow chart showing other processing in a routing control unit shown in Fig. 9;
Fig. 13 is a flow chart showing other processing in a routing control unit shown in Fig. 9; and

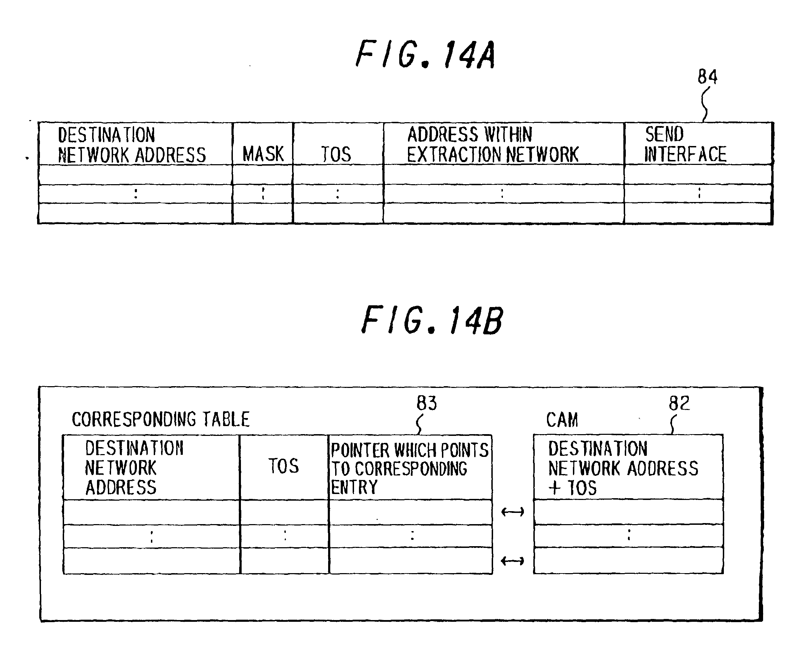

Fig. 14A is a diagram showing the construction of a routing table shown in Fig. 9, and Fig. 14B a diagram showing the construction of CAM and a corresponding table shown in Fig. 9.

### DESCRIPTION OF THE PREFERRED EMBODIMENTS

Preferred embodiments of the invention will be described in more detail with reference to the accompanying drawings. Fig. 1 is a block diagram showing the construction of a table-type data retrieval mechanism according to one preferred embodiment of the invention. In Fig. 1, the table-type data retrieval mechanism according to one preferred embodiment of the invention is a receive packet resolution section, such as an IP router (not shown), and comprises a high-speed retrieval mechanism 1, a medium-speed retrieval mechanism 2, a low-speed retrieval mechanism 3, and a synthetic circuit 4.

The receive packet resolution section extracts a necessary portion from the received packet in its header information, and the extracted portion is used as a retrieval keyword to find out a data entry, which matches this portion, from the data table (not shown). Based on information obtained from the data entry, a new packet header is rewritten, or output port information is imparted to said packet.

The high-speed retrieval mechanism 1 constituting the receive packet resolution section is a high-speed/high-cost retrieval mechanism, the medium-speed retrieval mechanism 2 a medium-speed/medium-cost retrieval mechanism, and the low-speed retrieval mechanism 3 a low-speed/low-cost retrieval mechanism. The synthetic circuit 4 functions to synthesize the results of retrieval of the high-speed retrieval mechanism 1, the medium-speed retrieval mechanism 2, and the low-speed retrieval mechanism 3, and to output the synthetic.

In this construction, an entry storing packet information to be retrieved at a high speed, for example, continuous data such as voices and images, is hit by retrieval with the high-speed retrieval mechanism 1. Packet information to be retrieved at a medium speed is not cataloged in the high-speed retrieval mechanism 1, is miss-hit by retrieval with the high-speed retrieval mechanism 1, and is hit by retrieval with the medium-speed retrieval mechanism 2, while the other packet information, for example, data such as text, is cataloged in only the low-speed retrieval mechanism 3 which is realized, for example, by software, and is hit by retrieval with the low-speed retrieval mechanism 3.

In this case, use is made of a characteristic such that, in general, a mechanism having high-speed retrieval performance is high in cost per unit entry, while a mechanism having low retrieval performance is low in cost per unit entry. That is, the high-cost retrieval mechanism (high-speed retrieval mechanism 1) is used in only packets with high arrival frequency or packets of users who bear reasonable charges for high performance, and the medium-cost retrieval mechanism (medium-speed retrieval mechanism 2) is used in packets with medium arrival frequency or packets of users who bear reasonable charges for medium quality, while the low-cost retrieval mechanism (low-speed retrieval mechanism 3) is used in the other cases. By virtue of this, as a whole, the cost can be kept low while meeting the demand for performance.

For a packet 100 before resolution input into the high-speed retrieval mechanism 1, when the table retrieval has been hit to resolve the packet, the high-speed retrieval mechanism 1 outputs and sends this packet as a resolved packet output 101 to the synthetic circuit 4. On the other hand, when the table retrieval could not have been resolved, the high-speed retrieval mechanism 1 outputs this packet as an unresolved packet output 102 to the next medium-speed retrieval mechanism 2.

For the unresolved packet output 102 output from the high-speed retrieval mechanism 1 and input into the medium-speed retrieval mechanism 2, when the table retrieval has been hit to resolve the packet, the medium-speed retrieval mechanism 2 outputs and sends this packet as a resolved packet output 103 to the synthetic circuit 4. On the other hand, when the table retrieval could not have been resolved, the medium-speed retrieval mechanism 2 outputs this packet as an unresolved packet output 104 to the next low-speed retrieval mechanism 3.

For the unresolved packet output 104 output from the medium-speed retrieval mechanism 2 and input into the low-speed retrieval mechanism 3, when the table retrieval has been hit to resolve the packet, the low-speed retrieval mechanism 3 outputs and sends this packet as a resolved packet output 105 to the synthetic circuit 4. The synthetic circuit 4 synthesizes the resolved packet outputs 101, 103, 105 respectively from the high-speed retrieval mechanism 1, the medium-speed retrieval mechanism 2, and the low-speed retrieval mechanism 3 to form a resolved packet output 106 which is then output from the synthetic circuit 4.

Fig. 2 is a block diagram showing an example of the logic construction of the high-speed retrieval mechanism 1, the medium-speed retrieval mechanism 2, and the low-speed retrieval mechanism 3 shown in Fig. 1. In Fig. 2, the retrieval mechanism comprises an FIFO (first in first out) resolution quene 11, a retrieval core mechanism 12, a resolved/unresolved packet separation mechanism 13, and a packet header overwrtie (addition of information on resolution result) mechanism 14.

In this retrieval mechanism, the packet input 100 before resolution is fed to the FIFO 11, and only the packet header is fed to the retrieval core mechanism 12. The solved/unsolved packet separation mechanism 13 outputs and sends the packet hit by retrieval with the retrieval core mechanism 12 among the packets stored in the FIFO 11 to the packet header overwrite mechanism 14, and outputs, as an unresolved packet output 102, the packet miss-hit by retrieval with the retrieval core mechanism 12.

when the packet has been hit by retrieval with the retrieval core mechanism 12, for the output including the output port designation and a new header from the retrieval core mechanism 12, the packet header overwrite mechanism 14 overwrites or added information to the packet fetched from FIFO 11 and the processed packet is output as a resolved packet output 101.

The difference in logical construction between the high-speed retrieval mechanism 1 and the medium-speed retrieval mechanism 2 and the low-speed retrieval mechanism 3 resides in whether the retrieval mechanism is constituted by hardware or software, as well as in the construction of the retrieval core mechanism 12. Thus, processing by the high-speed retrieval mechanism 1, processing by the medium-speed retrieval mechanism 2, and processing by the low-speed retrieval mechanism 3 are executed.

Here the high-speed retrieval mechanism 1 can be realized, for example, by an ultrahigh-speed retrieval mechanism using CAM (contents addressable memory). A method for constructing the retrieval mechanism using CAM is described, for example, in Kobayashi, Murase et al., "Maruchigiga Bitto Fowada Yo 50 Mpps Longest Prefix Match Kensaku LSI," Shingaku Giho, IN 98-119 (1998-11), pp. 7-12.

The medium-speed retrieval mechanism 2 can be realized by a retrieval acceleration algorithm using a hash, a retrieval acceleration algorithm utilizing a tree-type data structure or the like in combination with a hardware logic and a memory such as SRAM (static random access memory) or DRAM (dynamic random access memory).

Techniques for the retrieval acceleration algorithm utilizing a tree-type data structure are described. for example, in V. Srinivansan and George Varghese, "Faster IF Lookups using Controlled Prefix Expansion." ACM SIGMETRICS' 98, P. Guputa, S. Lin, and N. McKeown, "Routing Lookups in Hardware at Memory Access Speeds," INFOCOM' 98, (M. Degermark et al., "Small Forwarding Table for Fast Routing Lookups," SIGCOMM' 97, and N. Haung et al., "A Fast IP Routing Lookups Scheme for Gigabit Switching Routers," INFOCOM' 99.

Techniques for the retrieval acceleration algorithm using a hash are described, for example, in Marcel Waldvogel, George Varghese et al., "Scalable Highspeed IP Routing Lookups", SIGCOMM' 97, and Bulter Lampson, V. Srinivasan, and George Varghese, "IP Lookups using Multiway and Multicolumn Search," INFOCOM' 9B.

The low-speed retrieval mechanism 3 can be realized by software processing through various retrieval acceleration algorithms. Techniques for constructing a retrieval mechanism using this method are described, for example, in K. sklower, "A Tree-Based Packet Routing Table for Berkeley Unix," USENIX Winter' 91.

For these retrieval mechanisms, the order of cost and retrieval speed from highest to lowest is retrieval mechanism using CAM → retrieval acceleration algorithm utilizing a tree-type data structure → retrieval acceleration algorithm using a hash → software processing.

The operation of each of the high-speed retrieval mechanism
1. the medium-speed retrieval mechanism 2, and the low-speed retrieval mechanism 3 will be explained in conjunction with Fig.
2. In each retrieval mechanism, upon the receipt of the packet input 100 before resolution or the unresolved packet output 102, 104, this packet is fed to the FIFO quene 11, and the packet in its header is also fed to the retrieval core mechanism 12.

In the retrieval core mechanism 12, several information fields necessary for the retrieval of the table-type data structure are extracted from the received packet header, and are then assembled into a retrieval keyword, followed by the execution of the retrieval of the table. Here there are two cases, a case where a table entry, which matches the retrieval keyword, is hit by the retrieval, and a case where a table entry, which matches the retrieval keyword, is not hit by the retrieval.

Upon the receipt of the retrieval results from the retrieval core mechanism 12, the solved/unsolved packet separation mechanism 13 separates packets received from the FIFO quene 11 into two groups which are different from each other in the flow of the subsequent processing.

Specifically, when the packet could have been resolved, the packet output from the resolved/unresolved packet separation mechanism 13 is subjected to overwriting or information addition of the output of the result, from the retrieval core mechanism 12, including information on output port designation and a new header by the packet header overwrite mechanism 14, followed by output as a resolved packet output 101, 103, 105 for each retrieval mechanism.

On the other hand, when the packet could not have been resolved, the packet fetched from the FIFO quene 11 as such is sent as an unresolved packet output 102, 104 by the solved/unsolved packet separation mechanism 13.

Fig. 3 is a block diagram showing the construction of an IP (internet protocol) router using the table-type data retrieval mechanism according to one preferred embodiment of the invention. In Fig. 3, the IP router 5 comprises table-type data retrieval mechanisms 51-1 to 51-N and a switch fabric 52.

For each of the table-type data retrieval mechanisms 51-1 to 51-N, the construction and the operation are the same as those of the table-type data retrieval mechanism shown in Fig. 1. The table-type data retrieval mechanisms 51-1 to 51-N are connected respectively to input ports #1 to #N in the IP router 5 to perform retrieval operation. The switch fabric 52 sends the result of switching for the retrieval result for each of the table-type data retrieval mechanisms 51-1 to 51-N to output ports #1 to #N.

Fig. 4 is a flow chart showing the operation of the table-type data retrieval mechanism according to one preferred embodiment of the invention. The operation of the whole table-type data retrieval mechanism according to one preferred embodiment of the invention will be explained in conjunction with Figs. 1 to 4.

For the input packet 100 before resolution, retrieval by the high-speed retrieval mechanism 1 is first executed (step S1 in Fig. 4). When the packet has been successfully resolved (step S2 in Fig. 4), overwriting of a packet header and the addition of information on the retrieval result are carried out according to the resolution result (step S3 in Fig. 4). The processed packet is output as a resolved packet output 101.

When the packet could not have been resolved by retrieval with the high-speed retrieval mechanism 1 (step S2 in Fig. 4), retrieval by the medium-speed retrieval mechanism 2 is then carried out (step S4 in Fig. 4). when the packet could have been successfully resolved by retrieval with the medium-speed retrieval mechanism 2 (step S5 in Fig. 4), overwriting of a packet header and the addition of information on the retrieval result are carried out according to the resolution result (step S6 in Fig. 4). The processed packet is output as a resolved packet output 103.

When the packet could not have been successfully resolved by retrieval with the medium-speed retrieval mechanism 2 (step S5 in Fig. 4), retrieval by the low-speed retrieval mechanism 3 is then carried out (step S7 in Fig. 4). In this step, fundamentally, even when all the packets could have been resolved or could not have been resolved, a decision is made on how to process the packet in question. Based on the retrieval result, overwriting of a packet header and the addition of information on the retrieval result are carried out, and the processed packet is output as a resolved packet output 105.

Thus, according to the invention, for the resolution of the packet, packet retrieval is handed over step by step from the high-speed, high-cost retrieval mechanism 1 to lower-performance, lower-cost retrieval mechanisms (medium-speed retrieval mechanism 2 and low-speed retrieval mechanism 3). Therefore, in a system wherein packets different from each other or one another in required policy on performance and cost are present together, this can avoid the incurrence of an unnecessary cost for providing unnecessarily high retrieval performance.

Thus, as a whole, the cost can be kept low while maintaining the performance necessary as the whole system. In the above preferred embodiment, three stages of retrieval mechanisms, a high-speed retrieval mechanism, a medium-speed retrieval mechanism, and a low-speed retrieval mechanism, are provided. Regarding the grade of the retrieval mechanism, however, any desired number (plurality) of grade stages of retrieval mechanisms may be provided for establishing the design of required performance and cost. For example, four stages of retrieval mechanisms, a retrieval mechanism using CAM, a retrieval mechanism of a retrieval acceleration algorithm utilizing a tree-type data structure, a retrieval mechanism of a retrieval acceleration algorithm using a hash, and software processing, may be provided.

Further, there is no particular limitation on the internal retrieval system used in the retrieval mechanisms, so far as the design of the necessary performance and cost can be established.

Fig. 5 is a block diagram showing the construction of a table-type data retrieval mechanism according to another preferred embodiment of the invention. The construction of the table-type data retrieval mechanism according to the preferred embodiment of the invention shown in Fig. 5 is basically the same as that of the table-type data retrieval mechanism according to the above-described preferred embodiment of the invention, except that a further device is made on the method for dynamically optimizing the optimal cataloging position of data entries. Specifically, this table-type data retrieval mechanism comprises a high-speed retrieval mechanism 1, a medium-speed retrieval mechanism 2, a low-speed retrieval mechanism 3, and a control CPU (central processing unit) 6.

An event report described below in detail is sent from each of the high-speed retrieval mechanism 1, the medium-speed retrieval mechanism 2, and the low-speed retrieval mechanism 3 to the control CPU 6 according to the retrieval hit frequency of table entries held in the respective mechanisms.

The software system on the control CPU 6 manages, on an entry management table 61, state information corresponding to all the individual table entries, decides the retrieval mechanism, in which the table entry is to be disposed, according to the event report, and performs necessary data entry operation (cataloging, change, and deleticn) for each of the high-speed retrieval mechanism 1, the medium-speed retrieval mechanism 2, and the low-speed retrieval mechanism 3.

The high-speed retrieval mechanism 1, the medium-spced retrieval mechanism 2, and the low-speed retrieval mechanism 3 each independently manage the retrieval hit frequency of all the entries. There are two thresholds for the retrieval hit frequency. When the retrieval hit frequency exceeds the first threshold, an upgrade trigger and an entry identifier are sent as an event report toward the control CPU 6. When the retrieval hit frequency is below the second threshold, a downgrade trigger and an entry identifier are sent as an event report toward the control CPU 6.

Fig. 6 is a diagram showing the detailed operation of state management for deciding a position where an entry is to be disposed, using an event report by the control CPU 6 shown in Fig. 5. In Fig. 6, attention is directed to a single entry, and, in order to decide the retrieval mechanism in which this entry is to be disposed, the current position, in which the entry is disposed, and the state information are managed in one-to-one relationship.

As soon as the control CPU 6 receives the event report, the control CPU 6 decides, based on the entry identifier contained in the event report, which state information managed on the control CPU 6 is to be processed. The current state of this entry and the upward next state and the downward next state specified according to the current state are learned from this.

When the event report contains an upgrade trigger, transition to the upward next state is executed, while, when the event report contains a downgrade trigger, transition to the downward next state is executed. The upward next state and the downward next state are previously defined for each entry in the software system on the control CPU 6.

For example, in the case of a high-speed state, if the transition condition is "downgrade trigger = true" and "downward next state = medium speed," then the transition to the medium-speed state is executed, while, if the transition condition is "downgrade trigger = true" and "downward next state = low speed," then the transition to the low-speed state is executed.

In the case of a medium-speed state, if the transition condition is "upgrade trigger = true" and "upward next state - high speed," then the transition co the high-speed state is executed, while, if the transition condition is "downgrade trigger = true" and "downward next state = low speed," then the transition to the low-speed state is executed.

In the case of a low-speed state, if the transition condition is "upgrade trigger = true" and "upward next state = high speed," then the transition to the high-speed state is executed, while, if the transition condition is "upgrade trigger = true" and "upward next state = medium speed, " then the transition to the medium-speed state is executed.

For the cataloging position of this data entry, the control CPU 6 accesses each of the high-speed retrieval mechanism 1, the medium-speed retrieval mechanism 2, and the low-speed retrieval mechanism 3 to perform cataloging/change/deletion of data so as to correspond to the changed state thus decided.

Fig. 7 is a flow chart showing the retrieval hit frequency management processing of entries for each of the high-speed retrieval mechanism 1, the medium-speed retrieval mechanism 2, and the low-speed retrieval mechanism 3 shown in Fig. 5, and Fig. 8 a flow chart showing the state management processing of the control CPU 6 shown in Fig. 5. The processing operation of the table-type data retrieval mechanism according to another preferred embodiment of the invention will be explained in conjunction with Figs. 5 to 8.

When the high-speed retrieval mechanism 1, the medium-speed retrieval mechanism 2, and the low-speed retrieval mechanism 3 each perform the retrieval hit frequency management processing of cataloged entries, the retrieval hit frequency of each entry, which is counted up each time when the entry is hit by retrieval, is fetched (step S11 in Fig. 7) to judge whether or not the fetched retrieval hit frequency exceeds the first threshold (step S12 in Fig. 7). If the fetched retrieval hit frequency exceeds the first threshold, then the upgrade trigger and the entry ID (identifier) are sent as an event report to the control CPU 6 (step S12 in Fig. 7).

On the other hand, if the fetched retrieval hit frequency does not exceed the first threshold, a judgment is made on whether the retrieval hit frequency is below the second threshold (step S14 in Fig. 7). When the fetched retrieval hit frequency is below the second threshold, the downgrade trigger and the entry ID are sent as an event report to the control CPU 6 (step S15 in Fig. 7). The above-described retrieval hit frequency management processing is performed for all the cataloged entries (steps S11 to S16 in Fig. 7).

When the control CPU 6 performs state management processing, the control CPU 6 judges whether or not an event report from each of the high-speed retrieval mechanism 1, the medium-speed retrieval mechanism 2, and the low-speed retrieval mechanism 3 is stored in a buffer (not shown) (step S21 in Fig. 8). When there is an event report stored in the buffer, the control CPU 6 reads out the event report from the buffer (step S22 in Fig. 8), In this case, the event report comprises an entry ID and an upgrade trigger or a downgrade trigger.

The control CPU 6 reads out the entry corresponding to the entry ID of the event report read out from the entry management table 61 (step S23 in Fig. 8). In this case, the entry comprises a current state, an upward next state, and a downward next state.

Thereafter, if the upgrade trigger of the read event report is true (step S24 in Fig. 8) and, at the same time, the current state is not the upward next state (step S25 in Fig. 8), then the control CPU 6 newly catalogs this entry in the retrieval mechanism corresponding to the upward next state (step S26 in Fig. 8), deletes the entry on the retrieval mechanism corresponding to the current state (step S27 in Fig. 8), and changes the value of the current state on the entry management table 61 to the upward next state (step S28 in Fig. 8).

On the other hand, if the downgrade trigger of the read event report is true (step S24 in Fig. 8) and, at the same time, the current state is not the downward next state (step S30 in Fig. 8), then the control CPU 6 newly catalogs this entry in the retrieval mechanism corresponding to the downward next state (step S31 in Fig. 8), deletes the entry on the retrieval mechanism corresponding to the current state (step s32 in Fig. 8), and changes the value of the current state on the entry management table 61 to the downward next state (step S33 in Fig. 8). The control CPU 6 repeats the above procedure until the processing is completed for all the event reports (steps S21 to S33 in Fig. 8).

Thus, in this preferred embodiment, based on a policy on previously specified performance and cost allocated for each data entry, the data entry can be dynamically repositioned according to the arrival frequency of the actual packet to be resolved.

For example, it is possible to adopt an operation method such that, in the packet flow, even in the case of an entry involved in communication for which ensuring high performance is contemplated despite of high cost, when a noncommunication time of a certain specified value or more is continued standing-by in the low-cost retrieval mechanism is carried out without occupying the high-cost retrieval mechanism and, as soon as the resumption of the communication has been detected, a return to the high-cost, high-performance retrieval mechanism is executed.

This can dynamically cope with the actual communication situation and thus has the effect of avoiding the incurrence of an unnecessary cost during temporary cut-off of the communication. By virtue of this construction, the whole cost can be kept low under dynamically optimized control while maintaining the necessary performance as the whole system.

In the present construction, for a data entry which should be fixed to a specific retrieval performance grade, two thresholds for the retrieval hit frequency for each entry managed by each of the above-described retrieval mechanism may be set, or alternatively, the designation of upward or downward next state held on the control CPU 6 side may be set, so as to prevent the entry from being moved from the specific state (specific retrieval mechanism). Although the use of an IP router has been described above, the invention can be also applied to Ether switches, MPLS (multi protocol label switching) switch nodes, ATM (asynchronous transfer mode) switch nodes, frame relay switch nodes and other systems.

As described above, the invention provides a table-type data retrieval mechanism, for retrieving a table using, as a retrieval key, information contained in a packet header of a packet to be processed in a packet processing system, thereby resolving how to handle the packet, the table-type data retrieval mechanism comprising: a first retrieval mechanism for performing the retrieval of the table at a high speed; a second retrieval mechanism for performing the retrieval of the table at a lower speed than the first retrieval mechanism; and a third retrieval mechanism for performing the retrieval of the table at a lower speed than the second retrieval mechanism, the retrieval being performed using one retrieval mechanism selected from the first retrieval mechanism, the second retrieval mechanism, and the third retrieval mechanism according to required retrieval performance and cost which are different from entry to entry to be cataloged in the table. By virtue of this construction, required retrieval performance can be realized at low cost, and the table-type data retrieval mechanism can dynamically cope with a variation in packet arrival frequency to reduce unnecessary cost.

The invention has been described in detail with particular reference to preferred embodiments, but it will be understood that variations and modifications can be effected within the scope of the invention.

## Claims

1. A table-type data retrieval mechanism, for retrieving a table using, as a retrieval key, information contained in a packet header of a packet to be processed in a packet processing system, thereby resolving how to handle the packet, said table-type data retrieval mechanism comprising:
a first retrieval mechanism for performing the retrieval of the table at a high speed; and
a second retrieval mechanism for performing the retrieval of the table at a lower speed than the first retrieval mechanism,
said retrieval being performed using one retrieval mechanism selected from the first retrieval mechanism and the second retrieval mechanism according to required retrieval performance and cost which are different from entry to entry to be cataloged in the table.

2. The table-type data retrieval mechanism according to claim 1, wherein the first retrieval mechanism and the second retrieval mechanism each comprise: storing means for successively storing received packets; retrieval means for extracting necessary portions from header information in the received packet and finding out, using these portions as a retrieval keyword, a data entry, which matches the keyword, from the table; and means for adding information based on the result of retrieval by the retrieval means to the received packet.

3. The table-type data retrieval mechanism according to claim 1 or 2, which further comprises management means for managing state information on whether, according to the individual entries of the table, the entry in question is placed in the first retrieval mechanism or the second retrieval methanism.

4. The table-type data retrieval mechanism according to claim 3, wherein the first and second retrieval mechanisms each independently manage the retrieval hit frequency for all the entries.

5. The table-type data retrieval mechanism according to claim 4, wherein the management means performs cataloging, change, and deletion of the entry with respect to the first retrieval mechanism and the second retrieval mechanism based on information sent from the first retrieval mechanism and the second retrieval mechanism.

6. A table-type data retrieval mechanism, for retrieving a table using, as a retrieval key, information contained in a packet header of a packet to be processed in a packet processing system, thereby resolving how to handle the packet, said table-type data retrieval mechanism comprising:
a first retrieval mechanism for performing the retrieval of the table at a high speed;
a second retrieval mechanism for performing the retrieval of the table at a lower speed than the first retrieval mechanism; and
a third retrieval mechanism for performing the retrieval of the table at a lower speed than the second retrieval mechanism,
said retrieval being performed using one retrieval mechanism selected from the first retrieval mechanism, the second retrieval mechanism, and the third retrieval mechanism according to required retrieval performance and cost which are different from entry to entry to be cataloged in the table.

7. The table-type data retrieval mechanism according to claim 6, wherein the first retrieval mechanism, the second retrieval mechanism, and the third retrieval mechanism each comprise: storing means for successively storing received packets: retrieval means for extracting necessary portions from header information in the received packet and finding out, using these portions as a retrieval keyword, a data entry, which matches the keyword, from the table; and means for adding information based on the result of retrieval by the retrieval means to the received packet.

8. The table-type data retrieval mechanism according to claim 6 or 7, wherein:
an entry storing packet information to be retrieved at a high speed is hit by retrieval with the first retrieval mechanism, while the other entries are miss-hit by the first retrieval mechanism;
an entry storing packet information to be retrieved at a medium speed is hit by retrieval with the second retrieval mechanism, while the other entries are miss-hit by the second retrieval mechanism; and
an entry storing information on packets other than the packets handled in the first and second retrieval mechanisms is hit by retrieval with the third retrieval mechanism.

9. The table-type data retrieval mechanism according to any one of claims 6 to 8, wherein, in the first retrieval mechanism, the retrieval of the table is realized by an ultrahigh-speed retrieval mechanism using an associative memory.

10. The table-type data retrieval mechanism according to any one of claims 6 to 9, wherein, in the second retrieval mechanism, the retrieval of the table is realized by a retrieval accelerating algorithm through hashing using a hardware logic and a memory.

11. The cable-type data retrieval mechanism according to any one of claims 6 to 9, wherein, in the second retrieval mechanism, the retrieval of the table is realized by a retrieval accelerating algorithm through the utilization of a tree-type data structure using a hardware logic and a memory.

12. The table-type data retrieval mechanism according to any one of claims 6 to 11, wherein, in the third retrieval mechanism, the retrieval of the table is realized by software processing.

13. The table-type data retrieval mechanism according to any one of claims 6 to 12, wherein the information contained in the packet in its header contains at least a combination of a destination address with other necessary information field within the header.

14. The table-type data retrieval mechanism according to any one of claims 6 to 13, wherein the retrieval of the table is used at least in one of the decision of a transfer destination port of the packet to be processed and the decision of a service class.

15. The table-type data retrieval mechanism according to any one of claims 6 to 14, which further comprises management means for managing state information on whether, according to the individual entries of the table, the entry in question is placed in the first retrieval mechanism, the second retrieval mechanism, or the third retrieval mechanism.

16. The table-type data retrieval mechanism according to claim 15, wherein the first retrieval mechanism, the second retrieval mechanism, and the third retrieval mechanism each independently manage the retrieval hit frequency for all the entries.

17. The table-type data retrieval mechanism according to claim 16, wherein the first retrieval mechanism, the second retrieval mechanism, and the third retrieval mechanism each are constructed so that, when the retrieval hit frequency has exceeded the first preset threshold, the information of transition to a retrieval mechanism, which performs retrieval at a higher speed than its own mechanism, is sent to the management means, while, when the retrieval hit frequency is lower than the second preset threshold, the information of transition to a retrieval mechanism, which performs retrieval at a lower speed than its own mechanism, is sent to the management means.

18. The table-type data retrieval mechanism according to claim 17, wherein the management means performs cataloging. change, and deletion of the entry with respect to the first retrieval mechanism, the second retrieval mechanism, and the third retrieval mechanism based on information sent from the first retrieval mechanism, the second retrieval mechanism, and the third retrieval mechanism.

19. A packet processing system comprising: a table-type data retrieval mechanism according to any one of claims 1 to 5; and a switch fabric for outputting and sending the result of switching on the result of retrieval performed by the table-type data retrieval mechanism to an output port.

20. A packet processing system comprising: a table-type data retrieval mechanism according to any one of claims 6 to 18; and a switch fabric for outputting and sending the result of switching on the result of retrieval performed by the table-type data retrieval mechanism to an output port.

21. A table-type data retrieval method, for retrieving a table using, as a retrieval key, information contained in a packet header of a packet to be processed in a packet processing system, thereby resolving how to handle the packet, said table-type data retrieval method comprising:
a first retrieval step for performing the retrieval of the table at a high speed; and
a second retrieval step for performing the retrieval of the table at a lower speed than the first retrieval step,
said retrieval being performed by operating one retrieval step selected from the first retrieval step and the second retrieval step according to required retrieval performance and cost which are different from entry to entry to be cataloged in the table.

22. The table-type data retrieval method according to claim 21, which further comprises the step of managing state information on whether, according to the individual entries of the table, the entry in question is cataloged in the first retrieval step or the second retrieval step.

23. The table-type data retrieval method according to claim 22, wherein the first and second retrieval steps each independently manage the retrieval hit frequency for all the entries.

24. The table-type data retrieval method according to claim 23, wherein the step of managing state information performs cataloging, change, and deletion of the entry with respect to the first retrieval step and the second retrieval step based on information sent from the first retrieval step and the second retrieval step.

25. A table-type data retrieval method, for retrieving a cable using, as a retrieval key, information contained in a packet header of a packet to be processed in a packet processing system, thereby resolving how to handle the packet, said table-type data retrieval method comprising:
a first retrieval step for performing the retrieval of the table at a high speed;
a second retrieval step for performing the retrieval of the table at a lower speed than the first retrieval step when the resolution could not have been obtained in the first retrieval seep; and
a third retrieval step for performing the retrieval of the table at a lower speed than the second retrieval step when the resolution could not have been obtained in the second retrieval step.

26. The table-type data retrieval method according to claim 25, wherein the retrieval is performed using one retrieval step selected from the first retrieval step, the second retrieval step, and the third retrieval step according to required retrieval performance and cost which are different from entry to entry to be cataloged in the table.

27. The cable-type data retrieval method according to claim 25 or 26, wherein the first retrieval step, the second retrieval step, and the third retrieval step each successively store received packets, extract necessary portions from header information in the received packet, find out, using these portions as a retrieval keyword, a data entry, which matches the keyword, from the table, and add information based on the result of retrieval to the received packet.

28. The cable-type data retrieval method according to any one of claims 25 to 27, wherein:
in the first retrieval step, an entry storing packet information to be retrieved at a high speed is hit by retrieval, while the other entries are miss-hit;
in the second retrieval step, an entry storing packet information to be retrieved at a medium speed is hit by retrieval, while the other entries are miss-hit; and
in the third retrieval step, an entry storing information on packets other than the packets handled in the first and second retrieval steps is hit by retrieval.

29. The table-type data retrieval method according to any one of claims 25 to 28, wherein, in the first retrieval step, the retrieval of the table is realized by an ultrahigh-speed retrieval mechanism using an associative memory.

30. The table-type data retrieval method according to any one of claims 25 to 29, wherein, in the second retrieval step, the retrieval of the table is realized by a retrieval accelerating algorithm through hashing using a hardware logic and a memory.

31. The table-type data retrieval method according to any one of claims 25 to 29, wherein, in the second retrieval step, the retrieval of the table is realized by a retrieval accelerating algorithm through the utilization of a tree-type data structure using a hardware logic and a memory.

32. The cable-type data retrieval method according to any one of claims 25 to 31, wherein, in the third retrieval step, the retrieval of the table is realized by software processing.

33. The table-type data retrieval method according to any one of claims 25 to 32, wherein the information contained in the packet in its header contains at least a combination of a destination address with other necessary information field within the header.

34. The table-type data retrieval method according to any one of claims 25 to 33, wherein the retrieval of the table is used at least in one of the decision of a transfer destination port of the packet to be processed and the decision of a service class.

35. The table-type data retrieval method according to any one of claims 25 to 34, which further comprises the step of managing state information on whether, according to the individual entries of the table, the entry in question is cataloged in the first retrieval step, the second retrieval step, or the third retrieval step.

36. The table-type data retrieval method according to claim 35, wherein the first retrieval step, the second retrieval step, and the third retrieval step each independently manage the retrieval hit frequency for all the entries.

37. The table-type data retrieval method according to claim 36, wherein the first retrieval step. the second retrieval step, and the third retrieval step each are constructed so that, when the retrieval hit frequency has exceeded the first preset threshold, the information Of transition to a retrieval step, which performs retrieval at a higher speed than this step, is sent, while, when the retrieval hit frequency is lower than the second preset threshold, the information of transition to a retrieval step, which performs retrieval at a lower speed than this step, is sent.

38. The table-type data retrieval method according to claim 37, wherein the step of managing state information performs cataloging, change, or deletion of the entry with respect to the first retrieval step, the second retrieval step, and the third retrieval step based on information sent from the first retrieval step, the second retrieval step, and the third retrieval step.
